# NOUVEAU FASCICULE DE BREVET EUROPEEN

(11) **EP 1 042 394 B2**
(45) Date de publication et mention de la décision concernant l'opposition: **06.04.2011**
(45) Mention de la délivrance du brevet: 10.08.2005
(21) Numéro de dépôt: 98959965.9
(22) Date de dépôt: 11.12.1998
(51) Int. Cl.: C08K 3/04

(54) **COMPOSITIONS ANTISTATIQUES A BASE DE POLYAMIDE**
ANTISTATISCHE ZUSAMMENSETZUNGEN AUF BASIS VON POLYAMIDEN
ANTISTATIC COMPOSITIONS BASED ON POLYAMIDE

(30) Priorité: 23.12.1997 FR 9716406
(43) Date de publication de la demande: 11.10.2000
(73) Titulaire: ARKEMA FRANCE, 92700 Colombes (FR)
(72) Inventeur: BUSSI, Philippe Résidence Clairval, F-27300 Bernay (FR); PERY, Frédérique, F-27800 Saint Cyr de Salerne (FR); THOMASSET, Jacques, F-27300 Bernay (FR)
(74) Mandataire: Lhoste, Catherine
(86) Numéro de dépôt international: PCT/FR1998/002703
(87) Numéro de publication internationale: WO 1999/033908

(56) Documents cités:
- EP-A1- 0 470 606
- EP-A1- 0 512 703
- EP-A1- 0 730 115
- EP-A1- 1 403 030
- EP-B1- 1 036 967
- DE-C1- 4 025 301
- FR-A1- 2 460 198
- FR-A5- 2 089 734
- US-A- 4 153 582
- US-A- 5 084 504
- US-A- 5 179 155
- US-A- 5 352 289
- US-A- 5 469 892
- 'une publicité de MMM Carbon intitulée "Une nouvelle technologie en noir de carbone"' CAOUTCHOUCS & PLASTIQUES no. 742, Juin 1995, page 47
- PROBST N. ET AL.: 'New opportunities with a new carbon black process' KGK KAUTSCHUK GUMMI KUNSTSTOFFE vol. 46, no. 9, 1993, pages 707 - 709
- PROBST N., SMET H.: 'Low surface area conductive carbon blacks' KGK KAUTSCHUK GUMMI KUNSTSTOFFE no. 7-8, 1995, pages 509 - 511
- PROBST N., SMET H.,: 'Eine neue Familie von Leitrussen' GAK vol. 49, no. 11, 1996, pages 900 - 905
- PROBST N.,: 'Conductive carbon blacks' RUBBER TECHNOLOGY INTERNATIONAL 1997,
- 'une publicité de MMM S.A. intitulée "Ensaco carbon blacks - Hochleitfähige Russe"' KGK KAUTSCHUK GUMMI KUNSTSTOFFE vol. 49, no. 1, 1996, page 63
- ADOLF FRANCK, KARLHEINZ BIEDERBICK: 'Kunststoff-Kompendium', vol. 2, 1988, VOGEL BUCHVERLAG WÜRZBURG, WÜRZBURG page 84
- 'Six-Language Dictionary of Plastics and Rubber Technology', 1965, ILIFFE BOOKS LTS, LONDON pages 40, - 152,
- 'RÖMPP LEXIKON CHEMIE', vol. 10, 1996, GEORG THIEME VERLAG, STUTTGART - NEW YORK pages 231 - 232
- KIRK - OTHMER: 'Encyclopedia of Chemical Technology', vol. 4, 1992, JOHN WILEY & SONS, ISBN 0471526711 article 'Antistatic agents', pages 540 - 566

## Description

La présente invention porte sur des compositions à base de polyamide, utilisables notamment pour la fabrication de tubes et/ou canalisations mono- ou multicouches dans le domaine du transport et/ou du stockage d'hydrocarbures.

Dans les véhicules automobiles, sous l'effet de la pompe à injection, l'essence circule à grande vitesse dans les tubes reliant le moteur au réservoir, ces tubes étant obtenus à partir de compositions à base principalement de polyamide 11 ou 12 (RILSAN). Dans certains cas, le frottement essence/paroi interne du tube peut générer des charges électrostatiques, dont l'accumulation peut conduire à une décharge électrique (étincelle) capable d'enflammer l'essence avec des conséquences catastrophiques (explosion). Aussi, est-il nécessaire de limiter la résistivité superficielle de la face interne du tube à une valeur en général inférieure à 10⁶ ohms (Ω).

Par ailleurs, ces compositions à base de polyamide doivent satisfaire les autres critères du cahier des charges de la ligne essence et notamment la résistance au choc à froid. En outre, la composition de polyamide, rendue antistatique, doit être extrudable : on cherche donc à en limiter autant que possible la viscosité à l'état fondu. Elle doit aussi être résistante chimiquement aux essences peroxydées.

Il est connu d'abaisser la résistivité superficielle de résines ou matériaux polymériques en leur incorporant des matériaux conducteurs et/ou semi-conducteurs, tels que le noir de carbone, les fibres en acier, les fibres de carbone, les particules (fibres, plaquettes, sphères, etc.) métallisées avec de l'or, de l'argent ou du nickel, ou couvertes par une fine couche de polymère intrinsèquement conducteur ou semi-conducteur.

Parmi ces matériaux, le noir de carbone est plus particulièrement employé en raison de sa grande disponibilité commerciale et de ses bonnes performances.

Lorsque l'on augmente le taux de noir de carbone dans une composition polymérique, la résistivité évolue d'abord peu. Puis lorsqu'un taux critique de noir de carbone, appelé seuil de percolation, est atteint, la résistivité chute très brutalement jusqu'à atteindre un niveau relativement stable (zone de plateau), où une nouvelle augmentation du taux de noir de carbone ne modifie plus guère la résistivité.

Le bulletin technique "Ketjenblack EC - BLACK 94/01" de la Société AKZO NOBEL indique qu'un noir de carbone conducteur et/ou semi-conducteur est d'autant plus efficace - c'est-à-dire qu'il faut en ajouter peu au polymère pour lui conférer des propriétés antistatiques - que sa structure est développée. La structure d'un noir de carbone traduit la manière dont les particules carbonées de base, qui constituent le noir de carbone, sont arrangées en agrégats, voire en agglomérats. La structure d'un noir de carbone peut être exprimée par sa Surface Spécifique (mesurée par la méthode d'adsorption d'azote - méthode BET - selon la norme ASTM D 3037-89), ainsi que par son Absorption DBP (di-butyl-phtalate) (mesurée selon la norme ASTM D 2414-90). Les noirs de carbone commercialisés par la société AKZO NOBEL sont très structurés et caractérisés une surface BET et une absorption DBP élevées. Ils sont souvent qualifiés de noirs de carbone extra conducteurs. Grâce à leur structure développée, le seuil de percolation est atteint pour un faible taux d'addition.

En dehors de ses propriétés électroconductives et/ou semi-conductrices, le noir de carbone se comporte comme une charge, telle que, par exemple, le talc, la craie, le kaolin, et affecte donc de nombreuses autres propriétés physiques et chimiques.

Ainsi, l'homme du métier sait que, lorsque le taux de charges augmente, la viscosité du mélange polymère/charge augmente, ainsi que le module élastique de la composition. L'augmentation de viscosité s'observe par exemple par une mesure de l'indice de fluidité (MFI - melt flow index). De même, lorsque le taux de charges augmente, la ténacité ou résistance au choc du polymère chargé, exprimée par exemple par une mesure d'allongement à la rupture ou de résilience, diminue. L'augmentation de la viscosité et la diminution de la résistance au choc sont d'autant plus importantes que le taux de charges est élevé.

Aussi l'homme du métier préfère-t-il naturellement minimiser le taux de charge pour conférer la propriété souhaitée au mélange polymère/charge tout en affectant le moins possible les autres propriétés, comme la viscosité ou la résistance au choc. Ainsi, s'il s'agit d'obtenir une faible résistivité superficielle, l'homme du métier utilisera plutôt des noirs de carbone extra conducteurs.

La Société déposante a ainsi constaté que, pour du polyamide 12, de viscosité inhérente 1,65 (mesurée à 20°C pour un échantillon de 0,5 g dans 100 g de méta-crésol), plastifié par 11,4% en masse de n-butyl benzène sulfonamide (BBSA), et contenant au moins 6% en masse de noir de carbone Ketjenblack EC 600 JD de la société AKZO NOBEL (caractérisé par une absorption DBP supérieure à 400 ml/g et par une surface BET supérieure à 1000 m²/g), la résistivité superficielle sur tube est inférieure à 10⁶ ohms. Elle a de plus constaté, pour ce même polyamide, que la zone de plateau (10²-10³ ohms) est atteinte dès 10% en masse de noir de carbone Ketjenblack EC 600 JD.

Il apparaît cependant que ce noir de carbone, que l'on peut qualifier de "structuré" ou "plus structuré", se disperse mal dans le polyamide à l'état fondu, ce qui conduit à la présence d'agglomérats. Ces agglomérats ont un effet négatif sur la résilience.

La Société déposante a maintenant découvert de façon surprenante qu'en allant à l'encontre de l'enseignement de l'état antérieur de la technique, concernant, d'une part, le choix du type de noir de carbone, et, d'autre part, sa quantité mise en oeuvre, à savoir en utilisant un noir de carbone conducteur et/ou semi-conducteur "moins structuré" que le noir de carbone extra-conducteur ci-dessus et en outre en utilisant un tel noir de carbone en plus grande quantité que le noir de carbone extra-conducteur précédent, on parvenait à des compositions de polyamide présentant une meilleure résilience ainsi d'ailleurs que de meilleures propriétés rhéologiques (à niveaux de résistivité équivalents).

Le fait d'utiliser un noir de carbone moins structuré oblige à en augmenter la teneur en vue d'obtenir le même niveau d'antistatisme - on vise généralement une résistivité superficielle inférieure à 10⁶ ohms. Et malgré ce taux d'addition en noir de carbone plus élevé, on obtient de meilleures propriétés rhéologiques (une plus faible viscosité à l'état fondu, ce que l'on met en évidence par un indice de fluidité (MFI) plus élevé) et de résilience (résistance au choc). Cela est d'autant plus surprenant qu'en général - et comme on l'a souligné précédemment - plus on augmente le taux de charges, et plus justement on dégrade ces propriétés.

Ainsi, la présente invention, résidant dans le choix de ce noir de carbone "moins structuré", ne réalise pas un meilleur compromis antistatisme/autres propriétés, mais conduit à une composition antistatique à base de polyamide possédant intrinsèquement de meilleures propriétés rhéologiques et de résilience.

La présence invention a donc d'abord pour objet l'utilisation comme composition antistatique d'une composition comprenant au moins un polyamide et une quantité suffisante de noir de carbone pour le rendre antistatique, caractérisée par le fait que le noir de carbone est au moins un noir de carbone choisi parmi ceux ayant une surface spécifique BET, mesurée selon la norme ASTM D 3037-89, de 5 à 200 m²/g, en particulier de 20 à 100 m²/g, et une absorption DBP, mesurée selon la norme ASTM D 2414-90, de 125 à 250 ml/100 g. (La mesure de l'absorption DBP est celle d'un volume de pore exprimé en ml de di-butyl-phtalate pour 100 g de noir de carbone.)

Les noirs de carbone selon l'invention peuvent être qualifiés de conducteurs ou semi-conducteurs contrairement aux noirs de carbone extra-conducteurs utilisés conformément à la technique antérieure, lesquels possèdent de manière générale une surface BET supérieure à 500 m²/g et une absorption DBP supérieure à 300 ml/100 g.

Par ailleurs, les compositions antistatiques à base de polyamide de l'invention contiennent de préférence de 16 à 30% en masse de ces noir(s) de carbone conducteur(s) ou semi-conducteur(s) "moins structurés", et plus particulièrement de 17,5 à 23% en masse, par rapport à la composition totale.

Les compositions antistatiques à base de polyamide de la technique antérieure, utilisant des noirs de carbone extra-conducteurs "plus structurés", contiennent quant à elles généralement de 4 à 14% en masse, et plus particulièrement de 6 à 10% en masse, pour obtenir le même niveau d'antistatisme.

Malgré le taux de noir de carbone plus élevé, les compositions antistatiques selon l'invention présentent une meilleure fluidité et une meilleure résistance au choc, comme cela sera illustré par les Exemples ci-après.

Par polyamide au sens de la présente invention, on entend les polyamides ou PA qui contiennent des motifs aliphatiques et/ou cycloaliphatiques et/ou aromatiques.

On peut citer les polyamides obtenus par polycondensation d'un ou plusieurs lactames, d'α,ω-aminoacides ou par une polycondensation sensiblement stoechiométrique d'une ou plusieurs diamine(s) aliphatique(s) et d'un ou plusieurs diacide(s) carboxylique(s) aliphatique(s). On peut utiliser un excès de diamine de manière à obtenir un excès de groupes terminaux amine par rapport aux groupes terminaux carboxyle dans le polyamide.

Les lactames contiennent au moins 6 atomes de carbone, de préférence au moins 10. Les lactames préférés sont le décalactame, l'undécalactame, le dodécalactame.

Les α,ω-aminoacides préférés sont les acides 10-aminodécanoique, 11-aminoundécanoique, 12-aminododécanoïque.

Les diamines aliphatiques sont des α,ω-diamines contenant entre les groupements amino terminaux au moins 6 atomes de carbone, de préférence de 6 à 10. La chaîne carbonée peut être linéaire (polyméthylènediamine) ou ramifiée ou cycloaliphatique. Des diamines préférées sont l'hexaméthylènediamine (HMDA), la dodécaméthylènediamine, la décaméthylènediamine.

Les diacides carboxyliques peuvent être aliphatiques, cycloaliphatiques ou aromatiques. Les diacides carboxyliques aliphatiques sont des α,ω-diacides carboxyliques possédant au moins 4 atomes de carbone (non compris les atomes de carbone des groupements carboxyliques), de préférence au moins 6, dans la chaîne carbonée linéaire ou ramifiée. Les diacides sont les acides azélaïque, sébacique et 1,12-dodécanoïque.

A titre d'illustration de tels PA, on peut mentionner :
le polyhexaméthylènesébacamide (PA-6,10),
le polyhexaméthylènedodécanediamide (PA-6,12),
le poly(undécanoamide) (PA-11),
le polylauryllactame (PA-12),
le polydodécaméthylènedodécanediamide (PA-12,12),
le polycapronamide (PA-6),
le polyhexaméthylèneadipamide (PA-6,6).

Les PA ont une masse moléculaire moyenne en nombre en général supérieure ou égale à 5000. Leur viscosité inhérente (mesurée à 20°C pour un échantillon de 0,5 g dans 100 g de méta-crésol) est en général supérieure à 0,7.

Par PA au sens de la présente invention, on entend également les mélanges de polymères contenant au moins 50% en poids des polyamides décrits ci-dessus où la phase matricielle est constituée de polyamide.

A titre d'exemple de mélanges, on peut citer les mélanges de polyamides aliphatiques et de polyamides semi-aromatiques et/ou amorphes, tels que ceux décrits dans EP 550308, ainsi que les mélanges PA-polyoléfine et notamment ceux décrits dans EP 342066.

Par PA selon l'invention, on entend également les élastomères thermoplastiques (TPE) à base de polyamide qui sont des copolymères blocs, appelés aussi polyétheramides ou polyétherblocamides, dont les séquences rigides sont constituées de polyamide et les séquences souples cristallisables de polyéther.

Les compositions selon l'invention peuvent renfermer en outre au moins un additif choisi parmi :
- les plastifiants ;
- les additifs choc ;
- l'acide phosphorique, phosphoreux ou hydrophosphoreux ou leurs esters ou sels de sodium ou de potassium ou les combinaisons de ces produits ;
- les colorants ;
- les pigments, autres que le noir de carbone ;
- les azurants ;
- les anti-oxydants ;.
- les stabilisateurs UV ;
- les limiteurs de chaîne ; et
- les charges renforçantes.

Les plastifiants, dont la quantité peut aller jusqu'à 30% en masse par rapport à la composition totale, peuvent être n'importe quels plastifiants connus dans le domaine des polyamides, et sont notamment choisis parmi les dérivés de benzène sulfonamide, tels que le n-butyl benzène sulfonamide (BBSA) ("Ucemid A"), l'éthyl toluène sulfonamide ("Santicizer 8") ou le N-cyclohexyl toluène sulfonamide ("Santicizer 1H") ; les esters d'acides hydroxy-benzoïques, tels que le parahydroxybenzoate d'éthyl-2 hexyle (EHPB) et le parahydroxybenzoate de décyl-2 hexyle (DHPB) ; les lactames, tels que le caprolactame et la N-méthyl-pyrrolidone ; les esters ou éthers du tétrahydrofurfuryl alcool, comme l'oligoéthylèneoxytétrahydrofurfurylalcool ; et les esters de l'acide citrique ou de l'acide hydroxy-malonique, tels que l'oligoéthylèneoxy malonate. Un plastifiant particulièrement préféré est le n-butyl benzène sulfonamide (BBSA).

Les additifs choc, dont la quantité peut aller jusqu'à 40% en masse par rapport à la composition totale sont, par exemple :
1) les polyoléfines que l'on peut définir comme polymères comprenant des motifs oléfine, comme, par exemple, des motifs éthylène, propylène, butène-1 ou tout autre alpha oléfine ; à titre d'exemples, on peut citer :
   - les polyéthylènes, tels que les LDPE, HDPE, LLDPE ou VLDPE ;
   - le polypropylène ;
   - les copolymères éthylène/propylène ;
   - les PE, en particulier les VLDPE, obtenus avec un métallocène comme catalyseur ;
   - les copolymères de l'éthylène avec au moins un produit choisi parmi les sels ou les esters d'acides carboxyliques insaturés, ou les esters vinyliques d'acides carboxyliques insaturés.
   On peut citer en particulier le LLDPE, le VLDPE, le polypropylène, les copolymères éthylène/acétate de vinyle et les copolymères éthylène/(méth)acrylate d'alkyle ; la densité de la polyoléfine peut être avantageusement comprise entre 0,86 et 0,965, et son MFI peut être compris entre 0,3 et 40,
2) les copolymères séquencés, tels que les copolymères éthylène-propylène caoutchoucs (EPR), les copolymères styrène-*b*-butadiène-*b*-styrène (SBS), les copolymères styrène-*b*-isoprène-*b*-styrène (SIS), les copolymères éthylène-*b*-propylène-*b*-diène (EPDM), les copolymères éthylène-*b*-propylène-*b*-butadiène ou isoprène, les copolymères styrène-*b*-éthylène-butène-*b*-styrène (SEBS), tels que le copolymère commercialisé sous la dénomination "KRATON" par la Société Shell,
3) les polyoléfines fonctionnalisées, que l'on peut définir comme polymères comprenant des motifs alpha-oléfine et des motifs époxyde ou acide carboxylique ou anhydride d'acide carboxylique.
   A titre d'exemples, on peut citer les polyoléfines 1) et les polymères séquencés 2) greffés par des époxydes insaturés, tels que le (méth)acrylate de glycidyle, et/ou par des acides carboxyliques, tels que l'acide (méth) acrylique, et/ou par des anhydrides d'acides carboxyliques insaturés, tels que l'anhydride maléique.
   On peut encore citer :
   - les copolymères de l'éthylène, d'un époxyde insaturé et éventuellement d'un ester ou un sel d'acide carboxylique insaturé ou d'un ester vinylique d'acide carboxylique saturé. Ce sont, par exemple, les copolymères éthylène/acétate de vinyle/(méth)acrylate de glycidyle ou les copolymères éthylène/(méth)acrylate d'alkyle/(méth)acrylate de glycidyle ; à titre d'exemples de ces derniers, on peut mentionner ceux commercialisés sous la dénomination "LOTADER" par la Société ELF ATOCHEM ;
   - les copolymères de l'éthylène, d'un anhydride d'acide carboxylique insaturé et/ou d'un acide carboxylique insaturé pouvant être partiellement neutralisé par un métal (Zn) ou un alcalin (Li) et éventuellement d'un ester d'acide carboxylique insaturé ou d'un ester vinylique d'acide carboxylique saturé. Ce sont, par exemple, les copolymères éthylène/acétate de vinyle/anhydride maléique ou les copolymères éthylène/ (méth)acrylate d'alkyle ou d'aryle/anhydride maléique ou encore les copolymères éthylène/ (méth)acrylate de Zn ou Li/anhydride maléique ;
   - le polyéthylène, le polypropylène, les copolymères éthylène propylène greffés ou copolymérisés avec un anhydride d'acide carboxylique insaturé puis condensés avec un polyamide (ou un oligomère de polyamide) monoaminé. Ces produits sont décrits dans le brevet européen EP 342066.
   Avantageusement, la polyoléfine fonctionnalisée est choisie parmi les copolymères éthylène/acétate de vinyle/anhydride maléique, les copolymères éthylène/propylène majoritaires en propylène greffés par de l'anhydride maléique puis condensés avec du polyamide 6 monoaminé ou des oligomères monoaminés du caprolactame.
   On cite également tout particulièrement les co- ou terpolymères éthylène - (méth)acrylate d'alkyle ou d'aryle - anhydride d'acide dicarboxylique insaturé, comprenant de 77% à 99,2% en moles d'au moins un motif dérivé d'éthylène, de 0 à 20% en moles d'au moins un motif dérivé de (méth)acrylate(s) d'alkyle ou d'aryle et de 0,8 à 3% en moles d'au moins un motif dérivé d'anhydride(s) d'acide dicarboxylique insaturé, et ayant un indice de fluidité compris entre 0,1 et 400 g/10 min. mesuré selon la norme NFT 51-016 (190°C/charge de 2,16 kg) ; les groupements alkyle de l'acrylate ou méthacrylate d'alkyle entrant dans ces terpolymères pouvant être linéaires, ramifiés ou cycliques, et comporter jusqu'à 10 atomes de carbone ; à titre d'exemples de (méth)acrylate d'alkyle entrant dans la composition de ces terpolymères, on peut citer l'acrylate de méthyle, l'acrylate d'éthyle, l'acrylate de n-butyle, l'acrylate d'isobutyle, l'acrylate d'éthyl-2 hexyle, l'acrylate de cyclohexyle, le méthacrylate d'éthyle, et tout particulièrement l'acrylate d'éthyle, l'acrylate de n-butyle et l'acrylate de méthyle ; à titre d'exemples d'anhydrides d'acides dicarboxyliques insaturés entrant dans la définition de ces co- ou terpolymères, on peut citer l'anhydride itaconique, l'anhydride citraconique, l'anhydride méthyl-2 maléique, l'anhydride diméthyl-2,3 maléique, l'anhydride bicyclo[2.2.2]-oct-5-ène 2,3-dicarboxylique, de préférence l'anhydride maléique ; à titre d'exemples préférés de ces terpolymères éthylène-(méth)acrylate d'alkyle-anhydride d'acide dicarboxylique insaturé, on peut citer ceux commercialisés sous la dénomination "LOTADER" par la Société ELF ATOCHEM,
4) les ionomères, copolymères éthylène/acide (méth)acrylique, tels que celui commercialisé sous la dénomination "SURLYN" par la Société DuPONT.

A titre d'exemples de pigments, on peut citer le dioxyde de titane, l'oxyde de cobalt, l'oxyde de fer, le titanate de nickel, les pigments organiques comme les dérivés de phtalocyanine et d'anthraquinone.

Comme exemples d'azurants, on peut citer les dérivés de thiophène.

Les antioxydants sont, par exemple, l'iodure de cuivre combiné avec l'iodure de potassium, les dérivés des phénols encombrés et des amines encombrées.

Comme stabilisateurs UV, on peut mentionner les dérivés de résorcine, les benzotriazoles ou les salicylates.

Comme limiteurs de chaîne, on peut utiliser des acides monocarboxyliques ou dicarboxyliques ou des monoamines ou des diamines aliphatiques.

Des exemples de charges renforçantes sont la wollastonite, les billes de verre, le kaolin, le talc, le mica, le mélange de quartz, mica et chlorite connu sous le nom de "plastorite", le carbonate de calcium et/ou de magnésium, les fibres de verre, les fibres de nitrure de bore, les fibres de carbone.

Les compositions selon l'invention peuvent être obtenues de façon connue par toute technique de mélangeage des constituants à l'état fondu telle que, par exemple, l'extrusion ou compoundage sur extrudeuse mono- ou double vis, sur co-malaxeur ou par toute technique continue ou discontinue, comme par exemple à l'aide d'un mélangeur interne.

En particulier, sur une extrudeuse de type co-malaxeur, on peut introduire le ou les noirs de carbone en zone fondue, les granulés du ou des polyamides, le cas échéant modifiés par au moins un additif tel que défini ci-dessus, étant introduits pour partie dans la trémie d'alimentation, pour partie avec le ou les noirs de carbone.

La présente invention concerne également les tubes, tuyaux, et canalisations comprenant lesdites compositions de polyamide antistatiques. Ces articles peuvent être monocouches ou multicouches. Dans le cas d'articles multicouches, la couche la plus exposée à l'accumulation des charges électrostatiques sera à base d'une composition selon l'invention. L'invention permet en particulier de disposer de tube mono- ou multicouches antistatiques et résistants au choc, pour le transport et/ou le stockage d'hydrocarbures et notamment d'essence. Parmi toutes les méthodes conventionnelles de transformation utilisées dans l'industrie des thermoplastiques qui conviennent pour la réalisation d'articles, on citera tout particulièrement les techniques d'extrusion et de coextrusion.

Les Exemples suivants illustrent la présente invention sans toutefois en limiter la portée.

### EXRMPLES 1 à 3

On prépare comme suit des compositions de polyamide respectivement non antistatique (composition de référence), antistatique (composition comparative) et antistatique (composition de l'invention) ayant les formulations données dans le Tableau 1.

**Tableau 1**

| Exemple | 1 | 2 | 3 |
|---|---|---|---|
| Formulation de la composition de polyamide ........................... | non antistatique (de référence) | antistatique (comparative) | antistatique (de l'invention) |
| PA 12 ayant une viscosité inhérente de 1,65 | 84 | 76 | 62 |
| n-Butyl benzène sulfonamide | 4 | 4 | 4 |
| Elastomère thermoplastique à base de polyamide de type polyétherblocamide de dureté Shore D égale à 42 et de point de fusion 147°C | 12 | 12 | 12 |
| Noir de carbone extra conducteur commercialisé par la Société AKZO NOBEL sous la dénomination "Ketjenblack EC 600 JD", caractérisé par une absorption DPB supérieure à 400 ml/g et par une surface BET supérieure à 1000 m²/g | - | 8 | - |
| Noir de carbone commercialisé par la Société M.M.M. sous la dénomination "Ensaco 250 Granular", caractérisé par une absorption DBP d'environ 190 ml/g et par une surface BET d'environ 65 m²/g | - | - | 22 |

Pour préparer la composition de l'Exemple 1, on introduit les granulés de polyamide plastifié modifié par le polyétherblocamide, dans la trémie d'alimentation d'une extrudeuse de type comalaxeur. Les températures matières d'extrusion sont typiquement de l'ordre de 240 à 270°C. Le débit est de 15 à 20 kg/h.

Pour préparer les compositions des Exemples 2 et 3, le noir de carbone est introduit en zone fondue à l'aide d'une trémie gaveuse sur une extrudeuse de type co-malaxeur BUSS, les granulés de polyamide plastifié, modifié par le polyétherblocamide, étant introduits pour partie dans la trémie d'alimentation, pour partie avec le noir de carbone. Les températures de la matière d'extrusion sont typiquement de l'ordre de 240 à 270°C. Le débit est de 15 à 20 kg/h.

### EXEMPLE 4

### MESURE DE L'INDICE DE FLUIDITÉ (NORME ISO 1133:91)

L'indice de fluidité (MFI) de chacune des compositions des Exemples 1 à 3 est mesuré (en g/10 min) à 235°C sous 10 kg (Norme ISO 1133 : 91). Les échantillons testés contiennent moins de 0,1% d'humidité.

### MESURE DE LA RÉSISTIVITÉ SUPERFICIELLE (Essai indiqué au paragraphe 7.9 "Electrical résistance" de la norme SAE XJ 2260).

Les compositions des Exemples 1 à 3 sont extrudées sous forme de tubes monocouche de diamètre interne 6 mm et de diamètre externe 8 mm, sur une extrudeuse monovis équipée d'une vis de diamètre 45 mm, adaptée à l'extrusion des polyamides à des températures de 210 à 250°C.

Des électrodes cylindriques en cuivre sont introduites aux extrémités d'un tube de 100 mm de longueur. On applique une tension adaptée à ces électrodes et on mesure le courant. La résistance ainsi mesurée (mesure brute) est ensuite multipliée par la circonférence interne du tube, puis divisée par la distance entre électrodes ; on obtient la résistivité superficielle qui est exprimée en ohm (Ω).

### ESSAI DE CHOC MULTIAXIAL (NORME ISO 6603-2 : 89)

Les compositions des Exemples 1 à 3 sont injectées sur presse sous forme de plaques à des températures de 250 à 270°C. Ces plaques ont les dimensions suivantes : 100 x 100 x 2 mm et permettent d'effectuer les essais de choc multiaxial à une vitesse de 4,3 m/s. Dans cet essai, on mesure l'énergie totale absorbée (en Joules) par la composition au cours du choc. On note également le type de faciès de rupture : fragile ou ductile. Ces essais sont effectués à -30°C. Les plaques sont conditionnées 15 jours à 50% d'humidité relatives avant d'être testées.

### ESSAI DE CHOC SUR TUBE (essai indiqué au paragraphe 7-6 "Cold Température Impact" de la norme SAE XJ 2260).

Les compositions des Exemples 1 à 3 sont extrudées sous forme de tubes comme indiqué pour la mesure de la résistivité superficielle.

Une masse de 0,912 kg vient frapper un tube perpendiculairement d'une hauteur de 305 mm. Un tube passe l'essai s'il conserve après impact une résistance à l'éclatement (pression d'éclatement) supérieure à 70% de la pression d'éclatement d'un tube non impacté. Dans le cas contraire, on considère que le tube casse. Les tubes sont testés à -40°C. Les tubes sont conditionnés 15 jours à 50% d'humidité relative avant d'être testés.

Les résultats sont rapportés dans le Tableau 2.

**Tableau 2**

| Composition polyamide de l'Exemple | Indice de fluidité (g/10 min.) | Résistivité superficielle (Ω) | Choc multiaxial | Choc sur tube |
|---|---|---|---|---|
| | | | Energie totale absorbée (J) | Nombre de cassés / 10 |
| 1 (de référence) | >12 | >10¹³ | ≥ 60, Ductile | 0C/10 |
| 2 (comparatif) | 2-4 | 10²-10⁴ | ≤ 10, Fragile | ≥ 5C/10 |
| 3 (de l'invention) | 6-8 | 10²-10⁴ | ≥ 50, Ductile | ≤ 1C/10 |

## Revendications

1. Tubes et/ou canalisations mono ou multicouches, la couche la plus exposée à l'accumulation des charges électrostatiques étant à base d'une composition de polyamide antistatique, comprenant au moins un polyamide et une quantité suffisante de noir de carbone pour le rendre antistatique, **caractérisée par le fait que** le noir de carbone est au moins un noir de carbone choisi parmi ceux ayant une surface spécifique BET, mesurée selon la norme ASTM D3037-89, de 5 à 200m2/g, et une absorption DBP, mesurée selon la norme ASTM D 2414-90, de 50 à 300 ml/100 g.

2. Tubes et/ou canalisations mono ou multicouches selon la revendication 1, **caractérisée par le fait que** la surface BET du ou des noirs de carbone est de 20 à 100 m2/g.

3. Tubes et/ou canalisations mono ou multicouches selon l'une des revendications 1 et 2, **caractérisée par le fait que** l'absorption DBP du ou des noirs de carbone est de 125 à 250 ml/100 g.

4. Tubes et/ou canalisations mono ou multicouches selon l'une des revendications 1 à 3, **caractérisé par le fait que** le ou les noirs de carbone sont présents à raison de 16 à 30% en masse par rapport à la composition totale.

5. Tubes et/ou canalisations mono ou multicouches selon la revendication 4, **caractérisée par le fait que** le ou les noirs de carbone sont présents à raison de 17,5 à 23% en masse par rapport à la composition totale.

6. Tubes et/ou canalisations mono ou multicouches selon l'une des revendications 1 à 5, **caractérisé par le fait que** la composition de polyamide renferme en outre au moins un additif choisi parmi :
- les plastifiants ;
- les additifs choc ;
- l'acide phosphorique, phosphoreux ou hydrophosphoreux
ou leurs esters ou sels de sodium ou de potassium ou
les combinaisons de ces produits ;
- les colorants ;
- les pigments autres que le noir de carbone
- les azurants ; -les anti-oxydants ;
- les stabilisateurs W ;
- les limiteurs de chaîne; et
- les charges renforçantes.

7. Tubes et/ou canalisations mono ou multicouches selon la revendication 6, **caractérisée par le fait que** les plastifiants sont choisis parmi les dérivés de benzène sulfonamide, les esters d'acideshydroxy-benzoiques, les lactames, les esters ou éthers dutétrahydrofurfuryl alcool et les esters de l'acide citrique ou de l'acide hydroxymalonique.

8. Tubes et/ou canalisations mono ou multicouches selon la revendication 7, **caractérisée par le fait que** le plastifiant est le n-butyl-benzène sulfonamide (BBSA).

9. Tubes et/ou canalisations mono ou multicouches selon l'une des revendications 6 et 7, **caractérisé par le fait que** la quantité de plastifiant (s) va jusqu'à 30% en masse par rapport à la composition totale.

10. Tubes et/ou canalisations mono ou multicouches selon l'une quelconque des revendications précédentes formés par coextrusion.

11. Utilisation comme composition antistatique d'un polyamide comprenant une quantité suffisante de noir de carbone pour le rendre antistatique, dans laquelle le noir de carbone est au moins un noir de carbone choisi parmi ceux ayant une surface spécifique BET, mesurée selon la norme ASTM D3037-89, de 5 à 200m2/g, et une absorption DBP, mesurée selon la norme ASTM D 2414-90, de 125 à 250 ml/100 g.

12. Utilisation selon la revendication 11, dans laquelle la surface BET du ou des noirs de carbone est de 20 à 100 m2/g.

13. Utilisation selon l'une des revendications 11 à 12, dans laquelle le ou les noirs de carbone sont présents à raison de 16 à 30% en masse par rapport à la composition totale.

14. Utilisation selon la revendication 13, dans laquelle le ou les noirs de carbone sont présents à raison de 17,5 à 23% en masse par rapport à la composition totale.

15. Utilisation selon l'une des revendications 11 à 14, dans laquelle la composition renferme en outre au moins un additif choisi parmi :
- les plastifiants ;
- les additifs choc ;
- l'acide phosphorique, phosphoreux ou hydrophosphoreux
ou leurs esters ou sels de sodium ou de potassium ou
les combinaisons de ces produits ;
- les colorants ;
- les pigments autres que le noir de carbone
- les azurants ; -les anti-oxydants ;
- les stabilisateurs W ;
- les limiteurs de chaîne; et
- les charges renforçantes.

16. Utilisation selon la revendication 15, dans laquelle les plastifiants sont choisis parmi les dérivés de benzène sulfonamide, les esters d'acideshydroxy-benzoiques, les lactames, les esters ou éthers dutétrahydrofurfuryl alcool et les esters de l'acide citrique ou de l'acide hydroxymalonique.

17. Utilisation selon la revendication 16, dans laquelle le plastifiant est le n-butyl-benzène sulfonamide (BBSA).

18. Utilisation selon l'une des revendications 15 et 16, **caractérisé par le fait que** la quantité de plastifiant (s) va jusqu'à 30% en masse par rapport à la composition totale.

## Claims

1. Single-layer or multilayer tubes and/or pipes, the layer that is most exposed to the accumulation of electrostatic charges being based on an antistatic polyamide composition comprising at least one polyamide and a sufficient amount of carbon black to make it antistatic, **characterized in that** the carbon black is at least one carbon black selected from among those that have a BET specific surface area, measured according to ASTM Standard D3037-89, of from 5 to 200 m²/g and a DBP absorption, measured according to ASTM Standard D 2414-90, of from 50 to 300 ml/100 g.

2. Single-layer or multilayer tubes and/or pipes according to Claim 1, **characterized in that** the BET surface area of the carbon black or blacks is from 20 to 100 m²/g.

3. Single-layer or multilayer tubes and/or pipes according to either of Claims 1 and 2, **characterized in that** the DBP absorption of the carbon black or blacks is from 125 to 250 ml/100 g.

4. Single-layer or multilayer tubes and/or pipes according to one of Claims 1 to 3, **characterized in that** the carbon black or blacks are present in a concentration of from 16 to 30% by mass relative to the total composition.

5. Single-layer or multilayer tubes and/or pipes according to Claim 4, **characterized in that** the carbon black or blacks are present in a concentration of from 17.5 to 23% by mass relative to the total composition.

6. Single-layer or multilayer tubes and/or pipes according to one of Claims 1 to 5, **characterized in that** the polyamide composition also comprises at least one additive selected from:
- plasticizers;.
- impact additives;
- phosphoric acid, phosphorous acid or hydrophosphorous acid or their esters or sodium salts or potassium salts or combinations of these products;
- dyes;
- pigments, other than carbon black;
- brighteners;
- antioxidants;
- UV stabilizers;
- chain limiters; and
- reinforcing fillers.

7. Single-layer or multilayer tubes and/or pipes according to Claim 6, **characterized in that** the plasticizers are selected from among benzene sulphonamide derivatives, hydroxyl-benzoic acid esters, lactams, esters or ethers of tetrahydrofurfuryl alcohol and esters of citric acid or hydroxymalonic acid.

8. Single-layer or multilayer tubes and/or pipes according to Claim 7, **characterized in that** the plasticizer is n-butyl-benzene sulphonamide (BBSA).

9. Single-layer or multilayer tubes and/or pipes according to either of Claims 6 and 7, **characterized in that** the amount of plasticizer(s) goes up to 30% by mass relative to the total composition.

10. Single-layer or multilayer tubes and/or pipes according to any one of the preceding claims, formed by coextrusion.

11. Use as antistatic composition of a polyamide comprising a sufficient amount of carbon black to make it antistatic, wherein the carbon black is at least one carbon black selected from among those that have a BET specific surface area, measured according to ASTM Standard D3037-89, of from 5 to 200 m²/g and a DBP absorption, measured according to ASTM Standard D 2414-90, of from 125 to 250 ml/100 g.

12. Use according to Claim 11, wherein the BET surface area of the carbon black or blacks is from 20 to 100 m²/g.

13. Use according to one of Claims 11 to 12, wherein the carbon black or blacks are present in a concentration of from 16 to 30% by mass relative to the total composition.

14. Use according to Claim 13, wherein the carbon black or blacks are present in a concentration of from 17.5 to 23% by mass relative to the total composition.

15. Use according to one of Claims 11 to 14, wherein the composition also comprises at least one additive selected from:
- plasticizers;
- impact additives;
- phosphoric acid, phosphorous acid or hydrophosphorous acid or their esters or sodium salts or potassium salts or combinations of these products;
- dyes;
- pigments, other than carbon black;
- brighteners;
- antioxidants;
- UV stabilizers;
- chain limiters; and
- reinforcing fillers.

16. Use according to Claim 15, wherein the plasticizers are selected from among benzene sulphonamide derivatives, hydroxyl-benzoic acid esters, lactams, esters or ethers of tetrahydrofurfuryl alcohol and esters of citric acid or hydroxymalonic acid.

17. Use according to Claim 16, wherein the plasticizer is n-butyl-benzene sulphonamide (BBSA).

18. Use according to either of Claims 15 and 16, **characterized in that** the amount of plasticizer(s) goes up to 30% by mass relative to the total composition.

## Patentansprüche

1. Ein- oder mehrschichtige Rohre und/oder Rohrleitungen, wobei die gegenüber der Ansammlung elektrostatischer Ladungen am stärksten ausgesetzte Schicht auf einer antistatischen Polyamidzusammensetzung basiert, welche mindestens ein Polyamid und eine zur antistatischen Ausrüstung des Polyamids ausreichende Menge Ruß enthält, **dadurch gekennzeichnet, daß** es sich bei dem Ruß um mindestens einen unter Rußen mit einer gemäß der ASTM-Norm D3037-89 gemessenen spezifischen BET-Oberfläche von 5 bis 200 m²/g und einer gemäß der ASTM-Norm D 2414-90 gemessenen DBP-Absorption von 50 bis 300 ml/100 gausgewählten Ruß handelt.

2. Ein- oder mehrschichtige Rohre und/oder Rohrleitungen nach Anspruch 1, **dadurch gekennzeichnet, daß** die BET-Oberfläche des Rußes bzw, der Ruße 20 bis 100 m²/g beträgt.

3. Ein- oder mehrschichtige Rohre und/oder Rohrleitungen nach Anspruch 1 oder 2, **dadurch gekennzeichnet, daß** die DBP-Absorption des Rußes bzw. der Ruße 125 bis 250 ml/100 g beträgt.

4. Ein- oder mehrschichtige Rohre und/oder Rohrleitungen nach einem der Ansprüche 1 bis 3, **dadurch gekennzeichnet, daß** der Ruß oder die Ruße in einer Menge von 16 bis 30 Masse-%, bezogen auf die gesamte Zusammensetzung, vorliegen.

5. Ein- oder mehrschichtige Rohre und/oder Rohrleitungen nach Anspruch 4, **dadurch gekennzeichnet, daß** der Ruß oder die Ruße in einer Menge von 17,5 bis 23 Masse-%, bezogen auf die gesamte Zusammensetzung, vorliegen.

6. Ein- oder mehrschichtige Rohre und/oder Rohrleitungen nach einem der Ansprüche 1 bis 5, **dadurch gekennzeichnet, daß** die Polyamidzusammensetzung außerdem mindestens ein unter
- Weichmachern;
- Schlagzähigkeitsverbesserern;
- Phosphorsäure, phosphoriger Säure oder hydrophosphoriger Säure
oder deren Estern oder Natrium- oder Kaliumsalzen oder
Kombinationen dieser Produkte;
- Farbmitteln;
- anderen Pigmenten als Ruß;
- Aufhellern;
- Antioxidantien;
- UV-Stabilisatoren;
- Kettenabbruchmitteln und
- verstärkenden Füllstoffen
ausgewähltes Additiv enthält.

7. Ein- oder mehrschichtige Rohre und/oder Rohrleitungen nach Anspruch 6, **dadurch gekennzeichnet, daß** die Weichmacher unter Benzolsulfonamid-Derivaten, Hyxdroxybenzoesäureestern, Lactamen, Estern oder Ethern von Tetrahydrofurfurylalkohol und Estern von Citronensäure oder Hydroxymalonsäure ausgewählt sind.

8. Ein- oder mehrschichtige Rohre und/oder Rohrleitungen nach Anspruch 7, **dadurch gekennzeichnet, daß** es sich bei dem Weichmacher um n-Butylbenzolsulfonamid (BBSA) handelt.

9. Ein- oder mehrschichtige Rohre und/oder Rohrleitungen nach Anspruch 6 oder 7, **dadurch gekennzeichnet, daß** die Weichmachermenge bis zu 30 Masse-%, bezogen auf die gesamte Zusammensetzung, beträgt.

10. Ein- oder mehrschichtige Rohre und/oder Rohrleitungen nach einem der vorhergehenden Ansprüche, hergestellt durch Coextrusion.

11. Verwendung eines Polyamids, das eine zur antistatischen Ausrüstung des Polyamids ausreichende Menge Ruß enthält, als antistatische Zusammensetzung, bei der es sich bei dem Ruß um mindestens einen unter Rußen mit einer gemäß der ASTM-Norm D3037-89 gemessenen spezifischen BET-Oberfläche von 5 bis 200 m²/g und einer gemäß der ASTM-Norm D 2414-90 gemessenen DBP-Absorption von 125 bis 250 ml/100 g ausgewählten Ruß handelt.

12. Verwendung nach Anspruch 11, bei der die BET-Oberfläche des Rußes bzw. der Ruße 20 bis 100 m²/g beträgt.

13. Verwendung nach einem der Ansprüche 11 bis 12, bei der der Ruß oder die Ruße in einer Menge von 16 bis 30 Masse-%, bezogen auf die gesamte Zusammensetzung, vorliegen.

14. Verwendung nach Anspruch 13, bei der der Ruß oder die Ruße in einer Menge von 17,5 bis 23 Masse-%, bezogen auf die gesamte Zusammensetzung, vorliegen.

15. Verwendung nach einem der Ansprüche 11 bis 14, bei der die Zusammensetzung außerdem mindestens ein unter
- Weichmachern;
- Schlagzähigkeitsverbesserern;
- Phosphonsäure, phosphoriger Säure oder hydrophosphoriger Säure
oder deren Estern oder Natrium- oder Kaliumsalzen oder
Kombinationen dieser Produkte;
- Farbmitteln;
- anderen Pigmenten als Ruß;
- Aufhellern;
- Antioxidantien;
- UV-Stabilisatoren;
- Kettenabbruchmitteln und
- verstärkenden Füllstoffen
ausgewähltes Additiv enthält.

16. Verwendung nach Anspruch 15, bei der die Weichmacher unter Benzolsulfonamid-Derivaten, Hyxdroxybenzoesäureestern, Lactamen, Estern oder Ethern von Tetrahydrofurfurylalkohol und Estern von Citronensäure oder Hydroxymalonsäure ausgewählt sind.

17. Verwendung nach Anspruch 16, bei der es sich bei dem Weichmacher um n-Butylbenzolsulfonamid (BBSA) handelt.

18. Verwendung nach Anspruch 15 oder 16, bei der die Weichmachermenge bis zu 30 Masse-%, bezogen auf die gesamte Zusammensetzung, beträgt.
